# EUROPEAN PATENT APPLICATION

(11) **EP 4 144 700 A1**
(43) Date of publication of application: **08.03.2023**
(21) Application number: 21796463.4
(22) Date of filing: 09.02.2021
(51) Int. Cl.: C01G 33/00, C01G 35/02, H01M 4/62, H01M 10/052, H01M 10/0562, H01B 1/06, H01B 1/08, H01M 6/18

(54) **SOLID ELECTROLYTE MATERIAL AND BATTERY USING SAME**

(30) Priority: 30.04.2020 JP 2020080659
(71) Applicant: Panasonic Intellectual Property Management Co., Ltd., Osaka-shi, Osaka 540-6207 (JP)
(72) Inventor: TAKEUCHI Kaori, Chuo-ku, Osaka-shi, Osaka 540-6207 (JP); TANAKA Yoshiaki, Chuo-ku, Osaka-shi, Osaka 540-6207 (JP); ASANO Tetsuya, Chuo-ku, Osaka-shi, Osaka 540-6207 (JP); SAKAI Akihiro, Chuo-ku, Osaka-shi, Osaka 540-6207 (JP)
(74) Representative: Eisenführ Speiser
(86) International application number: PCT/JP2021/004838
(87) International publication number: WO 2021/220578

(57) **Abstract**

A solid electrolyte material of the present disclosure includes: Li; M; Al; O; and X, wherein the M is at least one selected from the group consisting of Ta and Nb, and the X is at least one selected from the group consisting of F, Cl, and Br.

## Description

### TECHNICAL FIELD

The present disclosure relates to a solid electrolyte material and a battery using the same.

### BACKGROUND ART

Patent Literature 1 discloses an all-solid-state battery using a sulfide solid electrolyte material.

### CITATION LIST

### Patent Literature

Patent Literature 1: JP 2011-129312 A

### SUMMARY OF INVENTION

### Technical Problem

The present disclosure aims to provide a novel solid electrolyte material having high utility.

### Solution to Problem

A solid electrolyte material of the present disclosure includes: Li; M; Al; O; and X, wherein the M is at least one selected from the group consisting of Ta and Nb, and the X is at least one selected from the group consisting of F, Cl, and Br.

### Advantageous Effects of Invention

The present disclosure provides a novel solid electrolyte material having high utility.

### BRIEF DESCRIPTION OF DRAWINGS

FIG. 1 shows a cross-sectional view of a battery 1000 according to a second embodiment.
FIG. 2 shows a cross-sectional view of an electrode material 1100 according to the second embodiment.
FIG. 3 shows a schematic view of a pressure-molding die 300 used to evaluate the ionic conductivity of solid electrolyte materials.
FIG. 4A is a graph showing X-ray diffraction patterns of solid electrolyte materials according to Examples 1 to 7.
FIG. 4B is a graph showing X-ray diffraction patterns of solid electrolyte materials according to Examples 8 and 9.
FIG. 5 is a graph showing X-ray diffraction patterns of solid electrolyte materials according to Comparative Examples 1 and 2.
FIG. 6 is a graph showing the initial discharge characteristics of a battery according to Example 1.

### DESCRIPTION OF EMBODIMENTS

Embodiments of the present disclosure will be described below with reference to the drawings. The present disclosure is not limited to the following embodiments.

### (First Embodiment)

A solid electrolyte material according to a first embodiment includes: Li; M; Al; O; and X, wherein the M is at least one selected from the group consisting of Ta and Nb, and the X is at least one selected from the group consisting of F, Cl, and Br.

The solid electrolyte material according to the first embodiment can have, for example, practical lithium-ion conductivity, and can have, for example, high lithium-ion conductivity. Here, high lithium-ion conductivity is, for example, 1 × 10⁻³ mS/cm or more. In other words, the solid electrolyte material according to the first embodiment can have an ionic conductivity of, for example, 1 × 10⁻³ mS/cm or more.

The solid electrolyte material according to the first embodiment can be used to achieve a battery having excellent charge and discharge characteristics. An example of the battery is an all-solid-state battery. The all-solid-state battery may be a primary battery or a secondary battery.

The solid electrolyte material according to the first embodiment can maintain high lithium-ion conductivity within an expected operating temperature range of batteries. Therefore, a battery including the solid electrolyte material according to the first embodiment can stably operate even in an environment where the temperature varies. The operating temperature range of batteries is, for example, from -30°C to 80°C.

It is desirable that the solid electrolyte material according to the first embodiment should be substantially free of sulfur. The phrase "the solid electrolyte material according to the first embodiment is substantially free of sulfur" means that the solid electrolyte material does not contain sulfur as a constituent element except for sulfur inevitably introduced as impurities. In this case, sulfur introduced as impurities into the solid electrolyte material has an amount of, for example, 1 mol% or less. It is desirable that the solid electrolyte material according to the first embodiment should be free of sulfur. Solid electrolyte materials free of sulfur generate no hydrogen sulfide when exposed to the atmosphere, and accordingly are excellent in safety. The sulfide solid electrolyte material disclosed in Patent Literature 1 might generate hydrogen sulfide when exposed to the atmosphere.

To increase the ionic conductivity of a solid electrolyte material, the solid electrolyte material according to the first embodiment may consist substantially of Li, M, Al, O, and X. Here, the phrase "the solid electrolyte material according to the first embodiment consists substantially of Li, M, Al, O, and X" means that the ratio (i.e., mole fraction) of the sum of the amounts of substance of Li, M, Al, O, and X to the total of the amounts of substance of all elements constituting the solid electrolyte material according to the first embodiment is 90% or more. In an example, the ratio may be 95% or more. The solid electrolyte material according to the first embodiment may consist of Li, M, Al, O, and X.

The solid electrolyte material according to the first embodiment may have a diffraction peak within a range of a diffraction angle 2θ from 11.08° to 15.63° (hereinafter referred to as "first range") in an X-ray diffraction pattern. Such a solid electrolyte material facilitates formation of paths for lithium ions to diffuse. As a result, the solid electrolyte material according to the first embodiment has high lithium-ion conductivity.

The diffraction peak in the X-ray diffraction pattern is also referred to simply as "peak".

The X-ray diffraction pattern of the solid electrolyte material according to the first embodiment can be obtained by X-ray diffraction measurement according to the θ-2θ method using Cu-Kα rays (wavelengths of 1.5405 Å and 1.5444 Å, i.e., wavelengths of 0.15405 nm and 0.15444 nm).

The angle of a peak refers to an angle at which the maximum intensity is exhibited for a projecting portion having a full width at half maximum of 10° or less at an SN ratio of 3 or more. The full width at half maximum refers to a width defined by the difference between two diffraction angles at which the intensity is half of I_{MAX} where I_{MAX} is the maximum intensity of the peak. The SN ratio refers to a ratio of a signal S to a background noise N.

To increase the ionic conductivity of the solid electrolyte material, X may be at least one selected from the group consisting of Cl and Br.

To increase the ionic conductivity of the solid electrolyte, M may be Ta.

To increase the ionic conductivity of the solid electrolyte material, the ratio of the amount of substance of Al to the sum of the amounts of substance of M and Al may be 5% or more and 70% or less. The ratio of the amount of substance of Al to the sum of the amounts of substance of M and Al is calculated by a mathematical expression {(the amount of substance of Al)/(the amount of substance of M + the amount of substance of AI)} × 100. The ratio of the amount of substance of Al to the sum of the amounts of substance of M and Al is hereinafter referred to also as "molar ratio AI/(M + Al)".

To increase the ionic conductivity of the solid electrolyte material, the molar ratio AI/(M + Al) may be 10% or more and 70% or less.

To increase the ionic conductivity of the solid electrolyte material, the molar ratio AI/(M + Al) may be 10% or more and 60% or less.

To further increase the ionic conductivity of the solid electrolyte material, the molar ratio AI/(M + Al) may be 10% or more and 40% or less.

The shape of the solid electrolyte material according to the first embodiment is not limited. The shape is, for example, acicular, spherical, or ellipsoidal. The solid electrolyte material according to the first embodiment may be in particle form. The solid electrolyte material according to the first embodiment may be formed in the shape of a pellet or a plate.

In the case where the shape of the solid electrolyte material according to the first embodiment is in particle form (e.g., spherical), the solid electrolyte material may have a median diameter of 0.1 µm or more and 100 µm or less, and may have a median diameter of 0.5 µm or more and 10 µm or less. This enables favorable dispersion of the solid electrolyte material according to the first embodiment and other materials. The median diameter of particle means the particle diameter (d50) at a cumulative volume equal to 50% in the volumetric particle size distribution. The volumetric particle size distribution can be measured with a laser diffraction measurement device or an image analysis device.

### <Method of Manufacturing Solid Electrolyte Material>

The solid electrolyte material according to the first embodiment can be manufactured by the following method.

Raw material powders are prepared and mixed together so as to obtain a target composition. Examples of the raw material powders include an oxide, a hydroxide, a halide, and an acid halide.

For example, assume a case where a solid electrolyte material consists of Li, Ta, Al, O, and Cl and the molar ratio Al/(M + Al) in the raw material mixing is 10%, i.e., a case where M is Ta, X is Cl, and the molar ratio Al/(M + Al) in the raw material mixing is 10%. In this case, Li₂O₂, TaCls, and AlCl₃ are mixed as raw material powders at a molar ratio of Li₂O₂: TaCls: AlCl₃ = 1: 1.8: 0.2. M and X are determined by selecting raw material powders. The molar ratio AI/(M + Al) is determined by selecting the molar ratio of the raw material powders. The raw material powders may be mixed together at a molar ratio adjusted in advance so as to cancel out a composition change which can occur in the synthesis process.

The mixture of the raw material powders is mechanochemically reacted with each other in a mixer such as a planetary ball mill to obtain a reaction product. This method is often referred to as mechanochemical milling. The reaction product may be fired in a vacuum or an inert atmosphere. Alternatively, the mixture may be fired in a vacuum or an inert gas atmosphere to obtain a reaction product. By these methods, the solid electrolyte material according to the first embodiment can be obtained. The inert atmosphere is, for example, an argon atmosphere or a nitrogen atmosphere.

By selecting raw material powders, the mixing ratio of the raw material powders, and the reaction conditions, the peak position, that is, the crystalline phase configuration, of the solid electrolyte material according to the first embodiment can be adjusted to a desired one.

The composition of the solid electrolyte material can be determined, for example, by inductively coupled plasma emission spectrometry or ion chromatography. For example, the compositions of Li, M, and Al can be determined by inductively coupled plasma emission spectrometry whereas the composition of X can be determined by ion chromatography.

### (Second Embodiment)

A second embodiment will be described below. The matters described in the first embodiment will be omitted as appropriate.

A battery according to the second embodiment includes a positive electrode, an electrolyte layer, and a negative electrode. The electrolyte layer is disposed between the positive electrode and the negative electrode. At least one selected from the group consisting of the positive electrode, the electrolyte layer, and the negative electrode includes the solid electrolyte material according to the first embodiment.

Owing to including the solid electrolyte material according to the first embodiment, the battery according to the second embodiment has excellent charge and discharge characteristics.

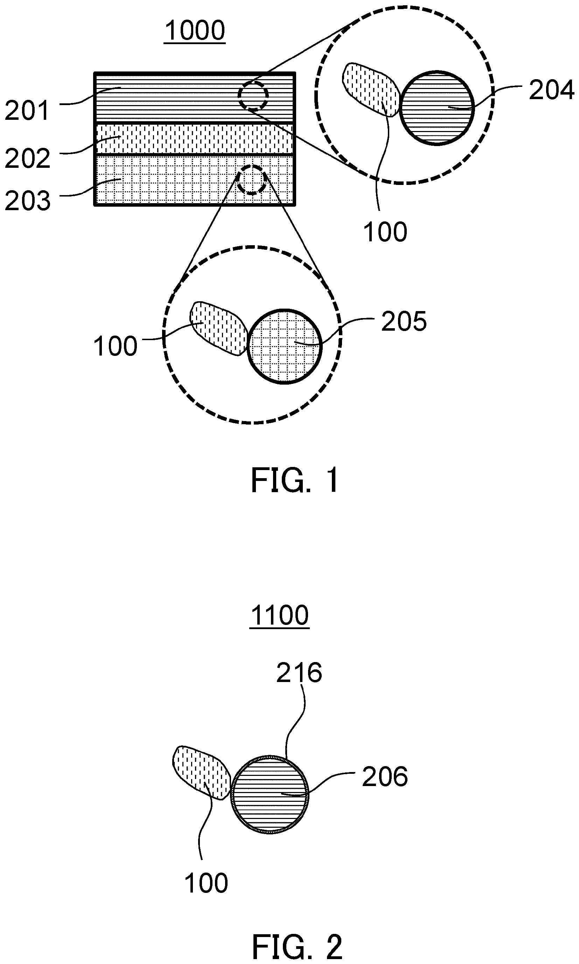

FIG. 1 shows a cross-sectional view of a battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 includes positive electrode active material particles 204 and solid electrolyte particles 100.

The electrolyte layer 202 includes an electrolyte material. The electrolyte material is, for example, a solid electrolyte material.

The negative electrode 203 includes negative electrode active material particles 205 and the solid electrolyte particles 100.

The solid electrolyte particles 100 are particles including the solid electrolyte material according to the first embodiment. The solid electrolyte particles 100 may be particles including the solid electrolyte material according to the first embodiment as the main component. The particles including the solid electrolyte material according to the first embodiment as the main component refer to particles in which the component contained in the largest amount in molar ratio is the solid electrolyte material according to the first embodiment. The solid electrolyte particles 100 may be particles consisting of the solid electrolyte material according to the first embodiment.

The positive electrode 201 includes a material capable of occluding and releasing metal ions such as lithium ions. The material is, for example, a positive electrode active material (e.g., the positive electrode active material particles 204).

Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(Ni, Co, Al)O₂, Li(Ni, Co, Mn)O₂, and LiCoO₂. From the viewpoint of cost and safety of the battery, lithium phosphate may be used as the positive electrode active material.

In the present disclosure, an expression "(A, B, C)" refers to "at least one selected from the group consisting of A, B, and C".

The positive electrode 201 may include, in addition to the solid electrolyte material according to the first embodiment, a transition metal oxyfluoride as the positive electrode active material. Even when the solid electrolyte material according to the first embodiment is fluorinated by the transition metal fluoride, a resistance layer is less likely to be formed. As a result, the battery has high charge and discharge efficiency.

The transition metal oxyfluoride contains oxygen and fluorine. The transition metal oxyfluoride may be, for example, a compound represented by a composition formula LiₚMe_{q}OₘFₙ. Here, Me is at least one selected from the group consisting of Mn, Co, Ni, Fe, Al, Cu, V, Nb, Mo, Ti, Cr, Zr, Zn, Na, K, Ca, Mg, Pt, Au, Ag, Ru, W, B, Si, and P, and the following mathematical relations are satisfied: 0.5 ≤ p ≤ 1.5; 0.5 ≤ q ≤ 1.0; 1 ≤ m < 2; and 0 < n ≤ 1. An example of such a transition metal oxyfluoride is Li_{1.05}(Ni_{0.35}Co_{0.35}Mn_{0.3})_{0.95}O_{1.9}F_{0.1}.

The positive electrode active material particles 204 may have a median diameter of 0.1 µm or more and 100 µm or less. In the case where the positive electrode active material particles 204 have a median diameter of 0.1 µm or more, favorable dispersion of the positive electrode active material particles 204 and the solid electrolyte particles 100 can be achieved in the positive electrode 201. This improves the charge and discharge characteristics of the battery. In the case where the positive electrode active material particles 204 have a median diameter of 100 µm or less, the diffusion rate of lithium in the positive electrode active material particles 204 improves. This enables the battery to operate at a high power.

The positive electrode active material particles 204 may have a median diameter larger than the solid electrolyte particles 100. This enables favorable dispersion of the positive electrode active material particles 204 and the solid electrolyte particles 100.

To increase the energy density and the power output of the battery, in the positive electrode 201, the ratio of the volume of the positive electrode active material particles 204 to the sum of the volume of the positive electrode active material particles 204 and the volume of the solid electrolyte particles 100 may be 0.30 or more and 0.95 or less.

FIG. 2 shows a cross-sectional view of an electrode material 1100 according to the second embodiment. The electrode material 1100 is included in, for example, the positive electrode 201. To prevent electrode active material particles 206 (i.e., the positive electrode active material) from reacting with the solid electrolyte particles 100, a coating layer 216 may be formed on the surface of each of the electrode active material particles 206. Accordingly, an increase in reaction overvoltage of the battery can be suppressed. Examples of a coating material included in the coating layer 216 include a sulfide solid electrolyte, an oxide solid electrolyte, and a halide solid electrolyte.

In the case where the solid electrolyte particles 100 are those of a sulfide solid electrolyte, the coating material may be the solid electrolyte material according to the first embodiment. The solid electrolyte material according to the first embodiment is less susceptible to oxidation than the sulfide solid electrolyte, and accordingly an increase in reaction overvoltage of the battery can be suppressed.

To increase the energy density and the power output of the battery, the positive electrode 201 may have a thickness of 10 µm or more and 500 µm or less.

The electrolyte layer 202 includes an electrolyte material. The electrolyte material is, for example, a solid electrolyte material. The electrolyte layer 202 may be a solid electrolyte layer.

The electrolyte layer 202 may include the solid electrolyte material according to the first embodiment. The electrolyte layer 202 may consist of the solid electrolyte material according to the first embodiment.

The solid electrolyte material included in the electrolyte layer 202 may consist of a solid electrolyte material different from the solid electrolyte material according to the first embodiment. Examples of the solid electrolyte material different from the solid electrolyte material according to the first embodiment include Li₂MgX'₄, Li₂FeX'₄, Li(Al, Ga, In)X'₄, Lis(AI, Ga, In)X's, and Lil. Here, X' is at least one selected from the group consisting of F, Cl, Br, and I.

Hereinafter, the solid electrolyte material according to the first embodiment is referred to as first solid electrolyte material. The solid electrolyte material different from the solid electrolyte material according to the first embodiment is referred to as second solid electrolyte material.

The electrolyte layer 202 may include not only the first solid electrolyte material but also the second solid electrolyte material. The first solid electrolyte material and the second solid electrolyte material may be homogenously dispersed. A layer formed of the first solid electrolyte material and a layer formed of the second solid electrolyte material may be stacked along the stacking direction of the battery 1000.

The electrolyte layer 202 may have a thickness of 1 µm or more and 100 µm or less. In the case where the electrolyte layer 202 has a thickness of 1 µm or more, a short-circuit between the positive electrode 201 and the negative electrode 203 is less likely to occur. In the case where the electrolyte layer 202 has a thickness of 100 µm or less, the battery can operate at a high power.

Another electrolyte layer may be further provided between the electrolyte layer 202 and the negative electrode 203. In other words, a second electrolyte layer may be further provided between the electrolyte layer 202 and the negative electrode 203. For example, in the case where the electrolyte layer 202 includes the first solid electrolyte material, the second electrolyte layer may consist of another solid electrolyte material that is electrochemically more stable than the first solid electrolyte material. Specifically, the reduction potential of the solid electrolyte material constituting the second electrolyte layer may be lower than the reduction potential of the first solid electrolyte material. Accordingly, the first solid electrolyte material can be used without being reduced, so that high ionic conductivity of the first solid electrolyte material can be maintained more stably. As a result, the charge and discharge efficiency of the battery can be improved.

The negative electrode 203 includes a material capable of occluding and releasing metal ions (e.g., lithium ions). The material is, for example, a negative electrode active material (e.g., the negative electrode active material particles 205).

Examples of the negative electrode active material include a metal material, a carbon material, an oxide, a nitride, a tin compound, and a silicon compound. The metal material may be an elemental metal material or an alloy. Examples of the metal material include lithium metal and a lithium alloy. Examples of the carbon material include natural graphite, coke, semi-graphitized carbon, a carbon fiber, spherical carbon, artificial graphite, and amorphous carbon. From the viewpoint of capacity density, preferred examples of the negative electrode active material include silicon (Si), tin (Sn), a silicon compound, and a tin compound.

The negative electrode active material may be selected based on the reduction resistance of the solid electrolyte material included in the negative electrode 203. In the case where the negative electrode 203 includes the first solid electrolyte material, a material capable of occluding and releasing lithium ions at 0.27 V or more with respect to lithium may be used as the negative electrode active material. Using such a material as the negative electrode active material can suppress reduction of the first solid electrolyte material included in the negative electrode 203. As a result, the battery has high charge and discharge efficiency. Examples of the negative electrode active material include a titanium oxide, an indium metal, and a lithium alloy. Examples of the titanium oxide include Li₄Ti₅O₁₂, LiTi₂O₄, and TiO₂.

The negative electrode active material particles 205 may have a median diameter of 0.1 µm or more and 100 µm or less. In the case where the negative electrode active material particles 205 have a median diameter of 0.1 µm or more, favorable dispersion of the negative electrode active material particles 205 and the solid electrolyte particles 100 can be achieved in the negative electrode 203. This improves the charge and discharge characteristics of the battery. In the case where the negative electrode active material particles 205 have a median diameter of 100 µm or less, the diffusion rate of lithium in the negative electrode active material particles 205 improves. This enables the battery to operate at a high power.

The negative electrode active material particles 205 may have a median diameter larger than the solid electrolyte particles 100. This enables favorable dispersion of the negative electrode active material particles 205 and the solid electrolyte particles 100.

To increase the energy density and the power output of the battery, in the negative electrode 203, the ratio of the volume of the negative electrode active material particles 205 to the sum of the volume of the negative electrode active material particles 205 and the volume of the solid electrolyte particles 100 may be 0.30 or more and 0.95 or less.

The electrode material 1100 shown in FIG. 2 is included in, for example, the negative electrode 203. To prevent the electrode active material particles 206 (i.e., the negative electrode active material) from reacting with the solid electrolyte particles 100, the coating layer 216 may be formed on the surface of each of the electrode active material particles 206. Accordingly, the battery has high charge and discharge efficiency. Examples of a coating material included in the coating layer 216 include a sulfide solid electrolyte, an oxide solid electrolyte, a polymer solid electrolyte, and a halide solid electrolyte.

In the case where the solid electrolyte particles 100 are those of the first solid electrolyte material, the coating material may include a sulfide solid electrolyte, an oxide solid electrolyte, or a polymer solid electrolyte. Examples of the sulfide solid electrolyte include Li₂S-P₂S₅. Examples of the oxide solid electrolyte include trilithium phosphate. Examples of the polymer solid electrolyte include a complex compound of polyethylene oxide and a lithium salt. Examples of such a polymer solid electrolyte include lithium bis(trifluoromethanesulfonyl)imide.

To increase the energy density and the power output of the battery, the negative electrode 203 may have a thickness of 10 µm or more and 500 µm or less.

To increase the ionic conductivity, at least one selected from the group consisting of the positive electrode 201, the electrolyte layer 202, and the negative electrode 203 may include the second solid electrolyte material. Examples of the second solid electrolyte material include a sulfide solid electrolyte, an oxide solid electrolyte, a halide solid electrolyte, and an organic polymer solid electrolyte.

In the present disclosure, the term "sulfide solid electrolyte" refers to a solid electrolyte containing sulfur. The term "oxide solid electrolyte" refers to a solid electrolyte containing oxygen. The oxide solid electrolyte may contain anions other than oxygen (excluding sulfur anions and halogen anions). The term "halide solid electrolyte" refers to a solid electrolyte containing a halogen element and being substantially free of sulfur. The halide solid electrolyte may contain not only a halogen element but also oxygen.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

Examples of the oxide solid electrolyte include:
(i) a NASICON solid electrolyte such as LiTi₂(PO₄)₃ and element-substituted substances thereof;
(ii) a perovskite solid electrolyte such as (LaLi)TiOs;
(iii) a LISICON solid electrolyte such as Li₁₄ZnGe₄O₁₆, Li₄SiO₄, and LiGeO₄ and element-substituted substances thereof;
(iv) a garnet solid electrolyte such as Li₇La₃Zr₂O₁₂ and element-substituted substances thereof; and
(v) Li₃PO₄ and N-substituted substances thereof.

An example of the halide solid electrolyte is a compound represented by LiₐMe'_{b}Y_{c}Z₆. Here, mathematical relations a + mb + 3c = 6 and c > 0 are satisfied. Me' is at least one selected from the group consisting of metalloid elements and metal elements other than Li and Y Z is at least one selected from the group consisting of F, Cl, Br, and I. The value m represents the valence of Me'.

The "metalloid elements" are B, Si, Ge, As, Sb, and Te.

The "metal elements" are: all the elements included in Groups 1 to 12 of the periodic table (excluding hydrogen); and all the elements included in Groups 13 to 16 of the periodic table (excluding B, Si, Ge, As, Sb, Te, C, N, P, O, S, and Se).

To increase the ionic conductivity of the halide solid electrolyte, Me' may be at least one selected from the group consisting of Mg, Ca, Sr, Ba, Zn, Sc, Al, Ga, Bi, Zr, Hf, Ti, Sn, Ta, and Nb.

Examples of the halide solid electrolyte include Li₃YCl₆ and Li₃YBr₆.

In the case where the electrolyte layer 202 includes the first solid electrolyte material, the negative electrode 203 may include a sulfide solid electrolyte. Accordingly, the sulfide solid electrolyte that is electrochemically stable with respect to the negative electrode active material suppresses contact between the first solid electrolyte material and the negative electrode active material. As a result, the battery has low internal resistance.

An example of the organic polymer solid electrolyte is a compound of a polymer compound and a lithium salt. The polymer compound may have an ethylene oxide structure. A polymer compound having an ethylene oxide structure can contain a large amount of a lithium salt, and accordingly has higher ionic conductivity.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

To facilitate transfer of lithium ions and thereby improve the output characteristics of the battery, at least one selected from the group consisting of the positive electrode 201, the electrolyte layer 202, and the negative electrode 203 may include a nonaqueous electrolyte solution, a gel electrolyte, or an ionic liquid.

The nonaqueous electrolyte solution contains a nonaqueous solvent and a lithium salt dissolved in the nonaqueous solvent. Examples of the nonaqueous solvent include a cyclic carbonate solvent, a linear carbonate solvent, a cyclic ether solvent, a linear ether solvent, a cyclic ester solvent, a linear ester solvent, and a fluorinated solvent. Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. One nonaqueous solvent selected from these may be used alone. Alternatively, a mixture of two or more nonaqueous solvents selected from these may be used.

Examples of the lithium salt include LiPF₆, LiBF₄, LiSbF₆, LiAsF₆, LiSOsCFs, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. The concentration of the lithium salt may fall within a range, for example, from 0.5 mol/L to 2 mol/L.

As the gel electrolyte, a polymer material impregnated with a nonaqueous electrolyte solution can be used. Examples of the polymer material include polyethylene oxide, polyacrylonitrile, polyvinylidene fluoride, polymethyl methacrylate, and a polymer having an ethylene oxide bond.

Examples of cations contained in the ionic liquid include:
(i) aliphatic linear quaternary salts such as tetraalkylammoniums and tetraalkylphosphoniums;
(ii) aliphatic cyclic ammoniums such as pyrrolidiniums, morpholiniums, imidazoliniums, tetrahydropyrimidiniums, piperaziniums, and piperidiniums; and
(iii) nitrogen-containing heterocyclic aromatic cations such as pyridiniums and imidazoliums.

Examples of anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

To increase the adhesion between particles, at least one selected from the group consisting of the positive electrode 201, the electrolyte layer 202, and the negative electrode 203 may contain a binder.

Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrenebutadiene rubber, and carboxymethylcellulose. As the binder, a copolymer may be used. Examples of the binder include a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from the above materials may be used.

To increase the electronic conductivity, at least one selected from the group consisting of the positive electrode 201 and the negative electrode 203 may contain a conductive additive.

Examples of the conductive additive include:
(i) graphites such as natural graphite and artificial graphite;
(ii) carbon blacks such as acetylene black and ketjen black;
(iii) conductive fibers such as a carbon fiber and metal fiber;
(iv) fluorinated carbon;
(v) metal powders such as an aluminum powder;
(vi) conductive whiskers such as a zinc oxide whisker and a potassium titanate whisker;
(vii) a conductive metal oxide such as titanium oxide; and
(viii) a conductive polymer compound such as polyaniline compound, polypyrrole compound, and polythiophene compound. To reduce the cost, the conductive additive in (i) or (ii) above may be used.

Examples of the shape of the battery according to the second embodiment include a coin type, a cylindrical type, a prismatic type, a sheet type, a button type, a flat type, and a stack type.

The battery according to the second embodiment may be manufactured, for example, by preparing a material for forming a positive electrode, a material for forming an electrolyte layer, and a material for forming a negative electrode, and producing by a known method a stack in which the positive electrode, the electrolyte layer, and the negative electrode are disposed in this order.

### Examples

The present disclosure will be described below in more detail with reference to examples.

### (Example 1)

### [Production of Solid Electrolyte Material]

In a dry atmosphere with a dew point of -30°C or less (hereinafter referred to as "dry atmosphere"), Li₂O₂, TaCls, and AlCl₃ were prepared as raw material powders at a molar ratio of Li₂O₂: TaCls: AlCl₃ = 1: 1.8: 0.2. These materials were pulverized and mixed in a mortar to obtain a mixture. The obtained mixture was milled with a planetary ball mill (Type P-7 manufactured by Fritsch GmbH) at 600 rpm for 24 hours. Thus, a powder of a solid electrolyte material according to Example 1 was obtained.

### [Ionic Conductivity Evaluation]

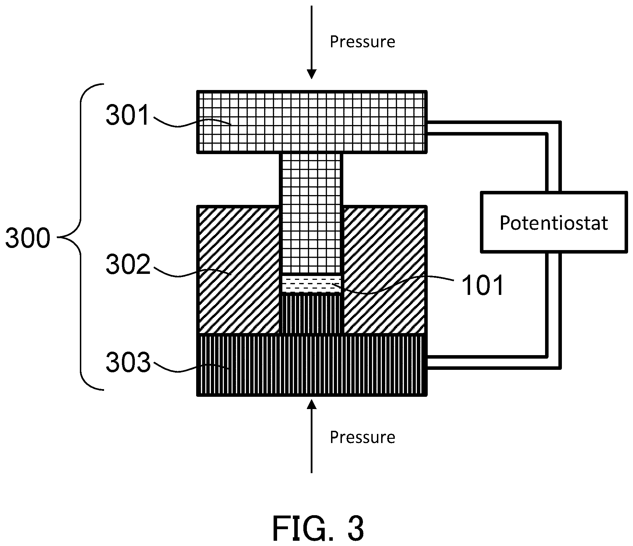

FIG. 3 shows a schematic view of a pressure-molding die 300 used to evaluate the ionic conductivity of solid electrolyte materials.

The pressure-molding die 300 included an upper punch 301, a die 302, and a lower punch 303. The die 302 was formed of insulating polycarbonate. The upper punch 301 and the lower punch 303 were each formed of electronically conductive stainless steel.

The pressure-molding die 300 shown in FIG. 3 was used to measure the ionic conductivity of the solid electrolyte material according to Example 1 by the following method.

In a dry atmosphere, the powder of the solid electrolyte material according to Example 1 was charged into the pressure-molding die 300. Inside the pressure-molding die 300, a pressure of 300 MPa was applied to the solid electrolyte material according to Example 1 (i.e., a solid electrolyte material powder 101 in FIG. 3) with the upper punch 301 and the lower punch 303.

While the pressure was being applied, the upper punch 301 and the lower punch 303 were connected to a potentiostat (VersaSTAT4 manufactured by Princeton Applied Research) equipped with a frequency response analyzer. The upper punch 301 was connected to a working electrode and a potential measurement terminal. The lower punch 303 was connected to a counter electrode and a reference electrode. The ionic conductivity of the solid electrolyte material according to Example 1 was measured at room temperature by an electrochemical impedance measurement method. As a result, the ionic conductivity measured at 22°C was 4.2 mS/cm.

### [X-Ray Diffraction Measurement]

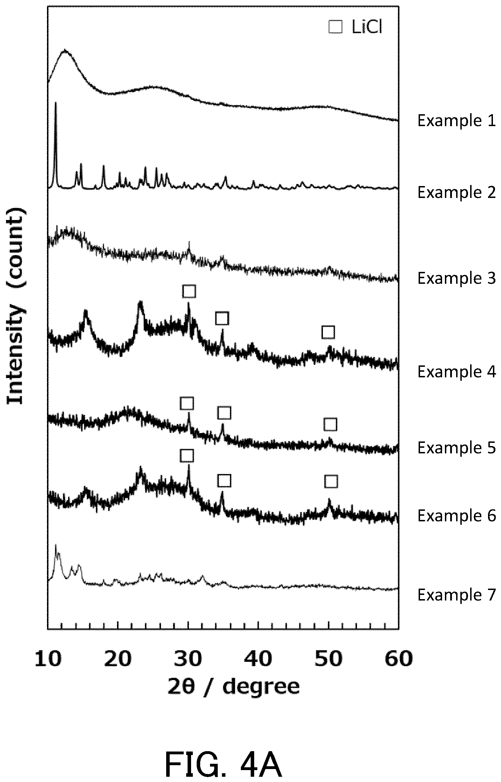

FIG. 4A is a graph showing an X-ray diffraction pattern of the solid electrolyte material according to Examples 1 to 7. The X-ray diffraction pattern was measured by the following method.

In a dry atmosphere with a dew point of -45°C or less, the X-ray diffraction pattern of the solid electrolyte material according to Example 1 was measured with an X-ray diffractometer (MiniFlex 600 manufactured by Rigaku Corporation). X rays sources used were Cu-Kα rays (wavelengths of 1.5405 Å and 1.5444 Å).

The solid electrolyte material according to Example 1 had a peak at 12.50°.

### [Production of Battery]

In an argon atmosphere with a dew point of -60°C or less, the solid electrolyte material according to Example 1 and LiCoO₂, which is a positive electrode active material, were prepared at a volume ratio of 50: 50. These materials were mixed together in a mortar to obtain a positive electrode mixture.

In an insulating cylinder having an inner diameter of 9.5 mm, the solid electrolyte material according to Example 1 (120 mg) and the above positive electrode mixture (10.6 mg) were stacked to obtain a stack. A pressure of 360 MPa was applied to this stack to form a solid electrolyte layer and a positive electrode. The solid electrolyte layer had a thickness of 500 µm.

Next, a Li-In alloy having a thickness of 200 µm was stacked on the solid electrolyte layer. A pressure of 80 MPa was applied to this stack to form a negative electrode.

Stainless steel current collectors were attached to the positive electrode and the negative electrode, and current collector leads were attached to the current collectors.

Finally, an insulating ferrule was used to block the inside of the insulating cylinder from the outside air atmosphere and seal the cylinder.

Thus, a battery according to Example 1 was obtained.

### [Charge and Discharge Test]

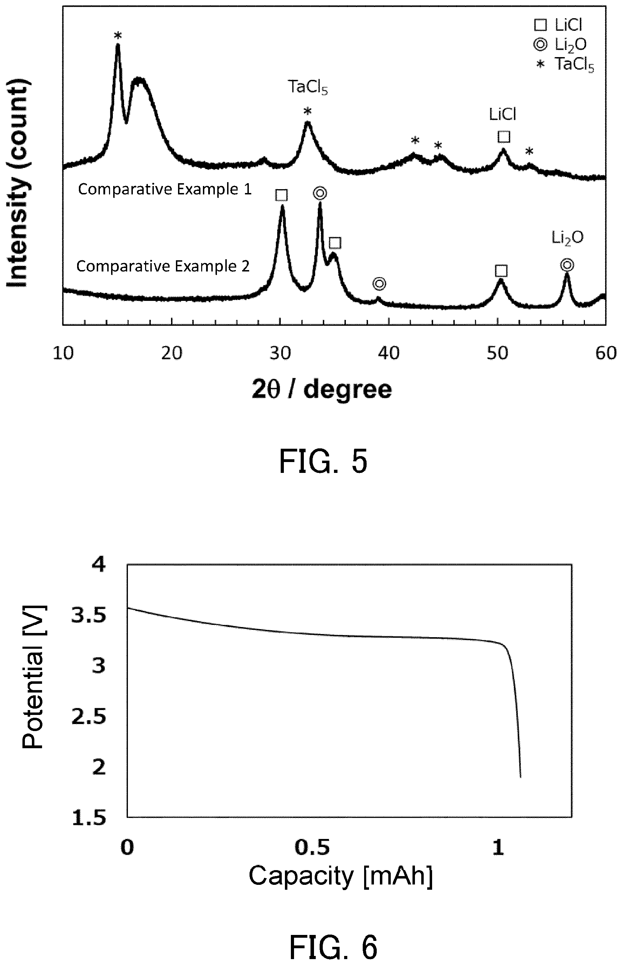

FIG. 6 is a graph showing the initial discharge characteristics of the battery according to Example 1. The initial discharge characteristics were measured by the following method.

The battery according to Example 1 was placed in a thermostatic chamber at 25°C.

The battery according to Example 1 was charged to a voltage of 3.6 V at a current value of 56 µA. The current density corresponds to 0.05 C rate.

Next, the battery was discharged to a voltage of 1.9 V at a current value of 56 µA.

The battery according to Example 1 was charged and discharged at room temperature.

As a result of the charge and discharge test, the battery according to Example 1 had an initial discharge capacity of 1.06 mAh.

### (Examples 2 to 9 and Comparative Examples 1 to 2)

### [Production of Solid Electrolyte Material]

In Example 2, Li₂O₂, TaCls, and AlCl₃ were prepared as raw material powders at a molar ratio of Li₂O₂: TaCls: AlCl₃ = 1: 1.8: 0.2. The mixture was milled and then fired at 200°C for 3 hours.

In Example 3, Li₂O₂, TaCls, and AlCl₃ were prepared as raw material powders at a molar ratio of Li₂O₂: TaCls: AlCl₃ = 1: 1.2: 0.8.

In Example 4, Li₂O₂, TaCls, and AlCl₃ were prepared as raw material powders at a molar ratio of Li₂O₂: TaCls: AlCl₃ = 1: 1.2: 0.8. The mixture was milled and then fired at 200°C for 3 hours.

In Example 5, Li₂O₂, TaCls, and AlCl₃ were prepared as raw material powders at a molar ratio of Li₂O₂: TaCls: AlCl₃ = 1: 0.8: 1.2.

In Example 6, Li₂O₂, TaCls, and AlCl₃ were prepared as raw material powders at a molar ratio of Li₂O₂: TaCls: AlCl₃ = 1: 0.8: 1.2. The mixture was milled and then fired at 200°C for 3 hours.

In Example 7, Li₂O₂, TaCls, AlCl₃, and TaFs were prepared as raw material powders at a molar ratio of Li₂O₂: TaCls: AlCl₃: TaFs = 1: 1.7: 0.2: 0.1. The mixture was milled and then fired at 200°C for 3 hours.

In Example 8, Li₂O₂, NbCls, and AlCl₃ were prepared as raw material powders at a molar ratio of Li₂O₂: NbCls: AlCl₃ = 1: 1.2: 0.8.

In Example 9, Li₂O₂, NbCls, and AlCl₃ were prepared as raw material powders at a molar ratio of Li₂O₂: NbCls: AlCl₃ = 1: 1.2: 0.8. The mixture was milled and then fired at 80°C for 3 hours.

In Comparative Example 1, Li₂O₂ and LiCI were prepared as raw material powders at a molar ratio of Li₂O₂: LiCI = 1: 1.

In Comparative Example 2, LiCI and TaCls were prepared as raw material powders at a molar ratio of LiCI: TaCls = 1: 1.

Solid electrolyte materials according to Examples 2 to 9 and Comparative Examples 1 to 2 were obtained in the same manner as in Example 1 except for the matters described above.

### [Ionic Conductivity Evaluation]

The ionic conductivity was measured for the solid electrolyte materials according to Examples 2 to 9 and Comparative Examples 1 to 2 in the same manner as in Example 1. The measurement results are shown in Table 1.

### [X-Ray Diffraction]

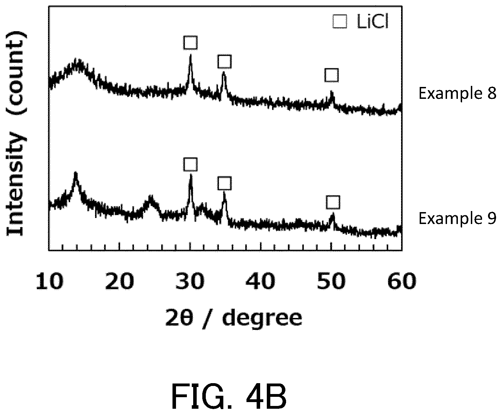

The X-ray diffraction pattern was measured for the solid electrolyte materials according to Examples 2 to 9 and Comparative Examples 1 to 2 in the same manner as in Example 1. FIG. 4A is a graph showing the X-ray diffraction patterns of the solid electrolyte materials according to Examples 1 to 7. FIG. 4B is a graph showing the X-ray diffraction patterns of the solid electrolyte materials according to Examples 8 and 9. FIG. 5 is a graph showing the X-ray diffraction patterns of the solid electrolyte materials according to Comparative Examples 1 and 2.

The solid electrolyte material according to Example 2 had a peak at 11.13°.

The solid electrolyte material according to Example 3 had a peak at 12.52°.

The solid electrolyte material according to Example 4 had a peak at 15.53°.

The solid electrolyte material according to Example 5 had no peak within the first range.

The solid electrolyte material according to Example 6 had a peak at 15.55°.

The solid electrolyte material according to Example 7 had a peak at 11.15°.

The solid electrolyte material according to Example 8 had a peak at 14.29°.

The solid electrolyte material according to Example 9 had a peak at 13.84°.

Comparative Examples 1 and 2 had no peak within the first range.

**[Table 1]**

| | Constituent element | Molar ratio Al/(M+Al) [%] | Molar ratio F/X [%] | Thermal treatment | Peak within first range [°] | Ionic conductivity [mS/cm] |
|---|---|---|---|---|---|---|
| Example 1 | Li-O-Ta-Al-Cl | 10 | 0 | No | 12.50 | 4.2 |
| Example 2 | | 10 | 0 | Yes | 11.13 | 7.2 |
| Example 3 | | 40 | 0 | No | 12.52 | 9.2×10⁻¹ |
| Example 4 | | 40 | 0 | Yes | 15.53 | 1.9 |
| Example 5 | | 60 | 0 | No | - | 3.8×10⁻¹ |
| Example 6 | | 60 | 0 | Yes | 15.55 | 9.9×10⁻¹ |
| Example 7 | Li-O-Ta-Al-Cl-F | 10 | 5 | Yes | 11.15 | 3.2 |
| Example 8 | Li-O-Nb-Al-Cl | 40 | 0 | No | 14.29 | 8.0×10⁻² |
| Example 9 | | 40 | 0 | Yes | 13.84 | 6.0×10⁻² |
| Comparative Example 1 | Li-O-Cl | 0 | 0 | No | - | 1.2×10⁻⁵ |
| Comparative Example 2 | Li-Ta-Cl | 0 | 0 | No | - | 5.6×10⁻⁴ |

### (Discussion)

As is clear from Table 1, the solid electrolyte materials according to Examples 1 to 9 have high ionic conductivity of 1 × 10⁻³ mS/cm or more near room temperature. Further, the solid electrolyte materials have high ionic conductivity of 1 × 10⁻² mS/cm or more.

As is clear from comparing Examples 1 to 4 with Examples 5 and 6, a solid electrolyte material in which the ratio of the amount of substance of Al to the sum of the amounts of substance of M and Al is 10% or more and 40% or less has higher ionic conductivity.

As is clear from comparing Examples 3 and 4 with Examples 8 and 9, a solid electrolyte material has higher ionic conductivity in the case where M is Ta than in the case where M is Nb.

The solid electrolyte materials according to Examples 1 to 9 are free of sulfur, and accordingly generate no hydrogen sulfide.

As described above, the solid electrolyte material according to the present disclosure has practical lithium-ion conductivity, and therefore is suitable for providing a battery having excellent charge and discharge characteristics.

### INDUSTRIAL APPLICABILITY

The battery of the present disclosure is utilized, for example, in all-solid-state lithium-ion secondary batteries.

## Claims

1. A solid electrolyte material comprising:
Li;
M;
Al;
O; and
X, wherein
the M is at least one selected from the group consisting of Ta and Nb, and
the X is at least one selected from the group consisting of F, Cl, and Br.

2. The solid electrolyte material according to claim 1, wherein
the solid electrolyte material includes a crystalline phase having a peak within a range of a diffraction angle 2θ from 11.08° to 15.63° in an X-ray diffraction pattern obtained by X-ray diffraction measurement using a Cu-Kα ray.

3. The solid electrolyte material according to claim 1 or 2, wherein
the X is at least one selected from the group consisting of Cl and Br.

4. The solid electrolyte material according to any one of claims 1 to 3, wherein
the M is Ta.

5. The solid electrolyte material according to any one of claims 1 to 4, wherein
a ratio of an amount of substance of the Al to a sum of amounts of substance of the M and the Al is 5% or more and 70% or less.

6. The solid electrolyte material according to claim 5, wherein
the ratio of the amount of substance of the Al to the sum of the amounts of substance of the M and the Al is 10% or more and 70% or less.

7. The solid electrolyte material according to claim 6, wherein
the ratio of the amount of substance of the Al to the sum of the amounts of substance of the M and the Al is 10% or more and 60% or less.

8. A battery comprising:
a positive electrode;
a negative electrode; and
an electrolyte layer disposed between the positive electrode and the negative electrode, wherein
at least one selected from the group consisting of the positive electrode, the negative electrode, and the electrolyte layer includes the solid electrolyte material according to any one of claims 1 to 7.
